# EUROPEAN PATENT APPLICATION

(11) **EP 4 822 518 A1**
(43) Date of publication of application: **14.10.2026**
(21) Application number: 24902867.1
(22) Date of filing: 11.12.2024
(51) Int. Cl.: G06F 7/505

(54) **ADDER, CHIP, AND ELECTRONIC DEVICE**

(30) Priority: 13.12.2023 CN 202311708303
(71) Applicant: Huawei Technologies Co., Ltd., Shenzhen, Guangdong 518129 (CN)
(72) Inventor: HAN, Kai, Shenzhen, Guangdong 518129 (CN); HUANG, Mingqiang, Shenzhen Guangdong 518055 (CN); LI, Wenshuo, Shenzhen, Guangdong 518129 (CN); WANG, Yunhe, Shenzhen, Guangdong 518129 (CN)
(74) Representative: Maiwald GmbH
(86) International application number: PCT/CN2024/138623
(87) International publication number: WO 2025/124449

(57) **Abstract**

This application provides an adder, a chip, and an electronic device. The adder includes a redundant encoding unit, a decoder unit, and a compute unit. In a process of computing a first target number that is a signed number and a second target number that is an unsigned number, a redundant number in a form of a differential pair represents the first target number that is the signed number, so that an efficient redundant number encoding and decoding process in the redundant encoding unit and the decoder unit can be implemented. Through a circuit design of the compute unit, high bit-width carry-free data processing can be implemented, thereby increasing the data computing speed.

## Description

### CROSS-REFERENCE TO RELATED APPLICATIONS

This application claims priority to Chinese Patent Application No. 202311708303.4, filed with the China National Intellectual Property Administration on December 13, 2023 and entitled "ADDER, CHIP, AND ELECTRONIC DEVICE", which is incorporated herein by reference in its entirety.

### TECHNICAL FIELD

This application relates to the field of integrated circuit technologies, and in particular, to an adder, a chip, and an electronic device.

### BACKGROUND

In a modern electronic computer system, an adder plays a key role as the most basic compute unit and is responsible for implementing a data addition operation. The adder is an indispensable part of numerical computation, logical operation, or data processing. In fact, a complex compute task can be finally decomposed into a series of addition operations. Therefore, performance and efficiency of the adder are critical to performance of the entire computing system.

Efficiency of the adder is directly affected by a carry operation of the adder, and the carry operation is one of the most critical steps in an addition process. Whether a carry occurs directly determines an overflow status of a number, thereby affecting accuracy of a computing result. Conventional adders include a ripple carry adder, a carry-lookahead adder, a carry-save adder, and the like. However, when high bit-width data needs to be processed, a problem of an excessively long carry chain is prone to occur in the ripple carry adder, and a problem of high logical resource consumption is prone to occur in the carry-lookahead adder. Therefore, a conventional adder needs to consume extra time and resources when performing a carry operation, which limits an overall computing speed.

### SUMMARY

Embodiments of this application provide an adder, a chip, and an electronic device, so that carry-free data processing can be implemented in a data computing process, thereby increasing the data computing speed.

According to a first aspect, this application provides an adder, including a redundant encoding unit, a decoder unit, and a compute unit. The redundant encoding unit is connected to each of the decoder unit and the compute unit, and the decoder unit is further connected to the compute unit. The redundant encoding unit is configured to: perform redundant encoding on each of a first target number and a second target number that are input into the adder; and when the first target number is a signed number and the second target number is an unsigned number, send a redundant encoding result of the first target number to the decoder unit, and send a redundant encoding result of the second target number to the compute unit. The decoder unit is configured to: decode the redundant encoding result of the first target number to obtain a first differential pair set; and send the first differential pair set to the compute unit. The compute unit is configured to: compute and output, based on the first differential pair set and the redundant encoding result of the second target number, a sum of the first target number and the second target number, or a difference between the first target number and the second target number.

Compared with the conventional technology, in this application, in a process of computing the first target number that is the signed number and the second target number that is the unsigned number, a redundant number in a form of a differential pair represents the first target number that is the signed number, so that an efficient redundant number encoding and decoding process can be implemented. Through a circuit design of the compute unit, high bit-width carry-free data processing can be implemented, thereby increasing the data computing speed. In a possible embodiment of this application, the decoder unit includes a positive factor unit and a negative factor unit. The positive factor unit is configured to decode the redundant encoding result of the first target number to obtain a plurality of first positive factors in the first differential pair set; and the negative factor unit is configured to decode the redundant encoding result of the first target number to obtain a plurality of first negative factors in the first differential pair set, where each first positive factor and a corresponding first negative factor are determined based on values of same bits in the redundant encoding result of the first target number.

In this application, the decoder unit is designed to include the positive factor unit and the negative factor unit, the positive factor unit is further used to determine the plurality of first positive factors in the first differential pair set, and the negative factor unit is further used to determine the plurality of first negative factors in the first differential pair set, to implement an efficient redundant number encoding and decoding process.

In a possible embodiment of this application, the positive factor unit includes a first inverter subunit and a first voltage regulation subunit, and the first inverter subunit is connected to the first voltage regulation subunit. The first inverter subunit is configured to: determine an output voltage value of the first inverter subunit based on the redundant encoding result of the first target number and a voltage value at which the first inverter subunit is connected; and send the output voltage value of the first inverter subunit to the first voltage regulation subunit. The first voltage regulation subunit is configured to determine the plurality of first positive factors in the first differential pair set based on the output voltage value of the first inverter subunit.

In this application, the positive factor unit is further designed to include the first inverter subunit and the first voltage regulation subunit, so that the first inverter subunit can regulate, based on the redundant encoding result of the first target number, the voltage value at which the first inverter subunit is connected. In this way, the first voltage regulation subunit can determine the plurality of first positive factors in the first differential pair set based on the output voltage value of the first inverter subunit, thereby implementing an efficient redundant number encoding and decoding process.

In a possible embodiment of this application, the negative factor unit includes a second inverter subunit and a second voltage regulation subunit, and the second inverter subunit is connected to the second voltage regulation subunit. The second inverter subunit is configured to: determine an output voltage value of the second inverter subunit based on the redundant encoding result of the first target number and a voltage value at which the second inverter subunit is connected; and send the output voltage value of the second inverter subunit to the second voltage regulation subunit. The second voltage regulation subunit is configured to determine the plurality of first negative factors in the first differential pair set based on the output voltage value of the second inverter subunit.

In this application, the negative factor unit is further designed to include the second inverter subunit and the second voltage regulation subunit, so that the second inverter subunit can regulate, based on the redundant encoding result of the first target number, the voltage value at which the second inverter subunit is connected. In this way, the second voltage regulation subunit can determine the plurality of first negative factors in the first differential pair set based on the output voltage value of the second inverter subunit, thereby implementing an efficient redundant number encoding and decoding process.

In a possible embodiment of this application, the compute unit includes a first compute subunit and a summation subunit. When the first target number is a signed number and the second target number is an unsigned number, the first compute subunit is configured to: determine a first intermediate value and a second intermediate value based on any first positive factor in the first differential pair set, a first negative factor corresponding to the first positive factor, and a value corresponding to the first positive factor in the redundant encoding result of the second target number; and send a plurality of first intermediate values and a plurality of second intermediate values to the summation subunit; and the summation subunit is configured to compute the sum of the first target number and the second target number based on the plurality of first intermediate values and the plurality of second intermediate values.

In this application, the compute unit is further designed to include the first compute subunit and the summation subunit, and the first compute subunit is used to obtain the plurality of first intermediate values and the plurality of second intermediate values, to implement high bit-width carry-free data processing, thereby increasing the data computing speed.

In a possible embodiment of this application, the first compute subunit includes a first voltage regulation subunit and a third voltage regulation subunit, and the third voltage regulation subunit is connected to the first voltage regulation subunit. The third voltage regulation subunit is configured to: determine an output voltage value of the third voltage regulation subunit based on any first positive factor in the first differential pair set, a first negative factor corresponding to the first positive factor, a value corresponding to the first positive factor in the redundant encoding result of the second target number, and a voltage value at which the third voltage regulation subunit is connected; and send the output voltage value of the third voltage regulation subunit to the first voltage regulation subunit. The first voltage regulation subunit is configured to determine the plurality of first intermediate values based on the output voltage value of the third voltage regulation subunit.

In this application, the first compute subunit is further designed, and after encoding and decoding of the first target number and the second target number are implemented by using a combination of different circuit modules, an encoding and decoding result can be computed in parallel to obtain the plurality of first intermediate values, to implement high bit-width carry-free data processing, thereby increasing the data computing speed.

In a possible embodiment of this application, the first compute subunit further includes a second voltage regulation subunit and a fourth voltage regulation subunit, and the fourth voltage regulation subunit is connected to the second voltage regulation subunit. The fourth voltage regulation subunit is configured to: determine an output voltage value of the fourth voltage regulation subunit based on any first positive factor in the first differential pair set, a first negative factor corresponding to the first positive factor, a value corresponding to the first positive factor in the redundant encoding result of the second target number, and a voltage value at which the fourth voltage regulation subunit is connected; and send the output voltage value of the fourth voltage regulation subunit to the second voltage regulation subunit. The second voltage regulation subunit is configured to determine the plurality of second intermediate values based on the output voltage value of the fourth voltage regulation subunit.

In this application, the first compute subunit is further designed, and after encoding and decoding of the first target number and the second target number are implemented by using a combination of different circuit modules, an encoding and decoding result can be computed in parallel to obtain the plurality of second intermediate values, to implement high bit-width carry-free data processing, thereby increasing the data computing speed.

In a possible embodiment of this application, the compute unit includes a second compute subunit and a summation subunit. When the first target number is a signed number and the second target number is an unsigned number, the second compute subunit is configured to: determine a third intermediate value and a fourth intermediate value based on any first positive factor in the first differential pair set, a first negative factor corresponding to the first positive factor, and a value corresponding to the first positive factor in the redundant encoding result of the second target number; and send a plurality of third intermediate values and a plurality of fourth intermediate values to the summation subunit; and the summation subunit is configured to compute the difference between the first target number and the second target number based on the plurality of third intermediate values and the plurality of fourth intermediate values.

In this application, the compute unit is further designed to include the second compute subunit and the summation subunit, and the second compute subunit is used to obtain the plurality of third intermediate values and the plurality of fourth intermediate values, to implement high bit-width carry-free data processing, thereby increasing the data computing speed.

In a possible embodiment of this application, the second compute subunit includes a second voltage regulation subunit and a fifth voltage regulation subunit, and the second voltage regulation subunit is connected to the fifth voltage regulation subunit. The fifth voltage regulation subunit is configured to: determine an output voltage value of the fifth voltage regulation subunit based on any first positive factor in the first differential pair set, a first negative factor corresponding to the first positive factor, a value corresponding to the first positive factor in the redundant encoding result of the second target number, and a voltage value at which the fifth voltage regulation subunit is connected; and send the output voltage value of the fifth voltage regulation subunit to the second voltage regulation subunit. The second voltage regulation subunit is configured to determine the plurality of third intermediate values based on the output voltage value of the fifth voltage regulation subunit.

In this application, the second compute subunit is further designed, and after encoding and decoding of the first target number and the second target number are implemented by using a combination of different circuit modules, an encoding and decoding result can be computed in parallel to obtain the plurality of third intermediate values, to implement high bit-width carry-free data processing, thereby increasing the data computing speed.

In a possible embodiment of this application, the second compute subunit further includes a first voltage regulation subunit and a sixth voltage regulation subunit, and the sixth voltage regulation subunit is connected to the first voltage regulation subunit. The sixth voltage regulation subunit is configured to: determine an output voltage value of the sixth voltage regulation subunit based on any first positive factor in the first differential pair set, a first negative factor corresponding to the first positive factor, a value corresponding to the first positive factor in the redundant encoding result of the second target number, and a voltage value at which the sixth voltage regulation subunit is connected; and send the output voltage value of the sixth voltage regulation subunit to the first voltage regulation subunit. The first voltage regulation subunit is configured to determine the plurality of fourth intermediate values based on the output voltage value of the sixth voltage regulation subunit.

In this application, the second compute subunit is further designed, and after encoding and decoding of the first target number and the second target number are implemented by using a combination of different circuit modules, an encoding and decoding result can be computed in parallel to obtain the plurality of fourth intermediate values, to implement high bit-width carry-free data processing, thereby increasing the data computing speed.

According to a second aspect, this application further provides an adder, including a redundant encoding unit, a decoder unit, and a compute unit. The redundant encoding unit is connected to each of the decoder unit and the compute unit, and the decoder unit is further connected to the compute unit. The redundant encoding unit is configured to: perform redundant encoding on each of a first target number and a second target number that are input into the adder; and when both the first target number and the second target number are signed numbers, send both a redundant encoding result of the first target number and a redundant encoding result of the second target number to the decoder unit. The decoder unit is configured to: decode the redundant encoding result of the first target number to obtain a first differential pair set; decode the redundant encoding result of the second target number to obtain a second differential pair set; and send the first differential pair set and the second differential pair set to the compute unit. The compute unit is configured to: compute and output, based on the first differential pair set and the second differential pair set, a sum of the first target number and the second target number, or a difference between the first target number and the second target number.

In this application, in a process of computing the first target number and the second target number that are the signed numbers, redundant numbers in a form of different differential pairs respectively represent the first target number and the second target number that are the signed numbers, so that an efficient redundant number encoding and decoding process can be implemented. Through a circuit design of the compute unit, high bit-width carry-free data processing can be implemented, thereby increasing the data computing speed.

In a possible embodiment of this application, the decoder unit includes a positive factor unit and a negative factor unit. The positive factor unit is configured to: decode the redundant encoding result of the first target number to obtain a plurality of first positive factors in the first differential pair set; and decode the redundant encoding result of the second target number to obtain a plurality of second positive factors in the second differential pair set; and the negative factor unit is configured to: decode the redundant encoding result of the first target number to obtain a plurality of first negative factors in the first differential pair set; and decode the redundant encoding result of the second target number to obtain a plurality of second negative factors in the second differential pair set, where each first positive factor and a corresponding first negative factor are determined based on values of same bits in the redundant encoding result of the first target number, and each second positive factor and a corresponding second negative factor are determined based on values of same bits in the redundant encoding result of the second target number.

In a possible embodiment of this application, the positive factor unit includes a first inverter subunit and a first voltage regulation subunit, and the first inverter subunit is connected to the first voltage regulation subunit. The first inverter subunit is configured to: determine a first output voltage value of the first inverter subunit based on the redundant encoding result of the first target number and a voltage value at which the first inverter subunit is connected; and send the first output voltage value of the first inverter subunit to the first voltage regulation subunit. The first voltage regulation subunit is configured to determine the plurality of first positive factors in the first differential pair set based on the first output voltage value of the first inverter subunit.

In a possible embodiment of this application, the first inverter subunit is further configured to: determine a second output voltage value of the first inverter subunit based on the redundant encoding result of the second target number and a voltage value at which the first inverter subunit is connected; and send the second output voltage value of the first inverter subunit to the first voltage regulation subunit. The first voltage regulation subunit is configured to determine the plurality of second positive factors in the second differential pair set based on the second output voltage value of the first inverter subunit.

In a possible embodiment of this application, the negative factor unit includes a second inverter subunit and a second voltage regulation subunit, and the second inverter subunit is connected to the second voltage regulation subunit. The second inverter subunit is configured to: determine a first output voltage value of the second inverter subunit based on the redundant encoding result of the first target number and a voltage value at which the second inverter subunit is connected; and send the first output voltage value of the second inverter subunit to the second voltage regulation subunit. The second voltage regulation subunit is configured to determine the plurality of first negative factors in the first differential pair set based on the first output voltage value of the second inverter subunit.

In a possible embodiment of this application, the second inverter subunit is further configured to: determine a second output voltage value of the second inverter subunit based on the redundant encoding result of the second target number and a voltage value at which the second inverter subunit is connected; and send the second output voltage value of the second inverter subunit to the second voltage regulation subunit. The second voltage regulation subunit is configured to determine the plurality of second negative factors in the second differential pair set based on the second output voltage value of the second inverter subunit.

In a possible embodiment of this application, the compute unit includes a first compute subunit, a second compute subunit, and a summation subunit. When both the first target number and the second target number are signed numbers, the first compute subunit is configured to: determine a fifth intermediate value and a sixth intermediate value based on any first positive factor in the first differential pair set, a first negative factor corresponding to the first positive factor, and a second positive factor corresponding to the first positive factor in the second differential pair set; and send a plurality of fifth intermediate values and a plurality of sixth intermediate values to the second compute subunit; the second compute subunit is configured to: determine a seventh intermediate value and an eighth intermediate value based on any second negative factor in the second differential pair set, a fifth intermediate value corresponding to the second negative factor, and a sixth intermediate value corresponding to the second negative factor; and send a plurality of seventh intermediate values and a plurality of eighth intermediate values to the summation subunit; and the summation subunit is configured to compute the sum of the first target number and the second target number based on the plurality of seventh intermediate values and the plurality of eighth intermediate values.

In this application, the compute unit is further designed to include the first compute subunit, the second compute subunit, and the summation subunit, and after encoding and decoding of the first target number and the second target number are implemented by using a combination of different circuit modules, an encoding and decoding result can be computed in parallel, and then the encoding and decoding result is divided by using different compute subunits, to implement high bit-width carry-free data processing, thereby increasing the data computing speed.

According to a third aspect, this application provides a chip, including the adder according to any one of the possible embodiments of the first aspect, or the adder according to any one of the possible embodiments of the second aspect.

According to a fourth aspect, this application provides an electronic device, including a circuit board and the chip according to any one of the possible embodiments of the third aspect, where the chip is disposed on the circuit board.

### BRIEF DESCRIPTION OF DRAWINGS

FIG. 1a is a schematic of a carry and sum circuit of a conventional half adder according to the conventional technology;
FIG. 1b is a schematic of a carry and sum circuit of a conventional full adder according to the conventional technology;
FIG. 2 is a diagram of a structure of an adder according to an embodiment of this application;
FIG. 3a is a diagram of a structure of a positive factor unit 202-1 according to an embodiment of this application;
FIG. 3b is a diagram of a structure of a negative factor unit 202-2 according to an embodiment of this application;
FIG. 4 is a diagram of a structure of a compute unit 203 according to an embodiment of this application;
FIG. 5a is a diagram of a structure of a first compute subunit 203-1 according to an embodiment of this application;
FIG. 5b is a diagram of a structure of a first compute subunit 203-1 according to an embodiment of this application;
FIG. 6 is a diagram of a structure of a compute unit 203 according to an embodiment of this application;
FIG. 7a is a diagram of a structure of a second compute subunit 203-3 according to an embodiment of this application;
FIG. 7b is a diagram of a structure of a second compute subunit 203-3 according to an embodiment of this application;
FIG. 8 is a diagram of a structure of a compute unit 203 according to an embodiment of this application;
FIG. 9 is a diagram of a structure of signed INT8 number+signed INT8 number according to an embodiment of this application;
FIG. 10 is a diagram of a structure of signed INT8 number+unsigned INT8 number according to an embodiment of this application;
FIG. 11 is a diagram of a structure of signed INT8 number-unsigned INT8 number according to an embodiment of this application; and
FIG. 12 is a diagram of an application scenario of an adder according to an embodiment of this application.

### DESCRIPTION OF EMBODIMENTS

To make the objectives, technical solutions, and advantages of this application clearer, the following further describes this application in detail with reference to the accompanying drawings.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

"A plurality of" in this application refers to two or more. The term "and/or" describes an association relationship between associated objects, and indicates that three relationships may exist. For example, A and/or B may indicate the following three cases: A exists alone, both A and B exist, and B exists alone, where A and B may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In a modern electronic computer system, an adder plays a key role as the most basic compute unit and is responsible for implementing a data addition operation. The adder is an indispensable part of numerical computation, logical operation, or data processing. In fact, a complex compute task can be finally decomposed into a series of addition operations. Therefore, performance and efficiency of the adder are critical to performance of the entire computing system.

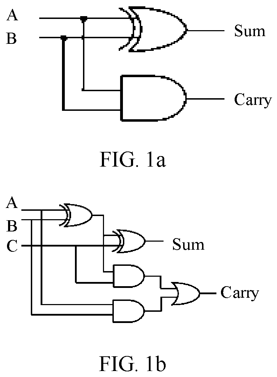

Efficiency of the adder is directly affected by a carry operation of the adder, and the carry operation is one of the most critical steps in an addition process. Whether a carry occurs directly determines an overflow status of a number, thereby affecting accuracy of a computing result. Conventional adders include a ripple carry adder, a carry-lookahead adder, a carry-save adder, and the like. However, when high bit-width data needs to be processed, a problem of an excessively long carry chain is prone to occur in the ripple carry adder, and a problem of high logical resource consumption is prone to occur in the carry-lookahead adder. Therefore, the conventional adder needs to consume extra time and resources when performing a carry operation, which limits an overall computing speed. For example, FIG. 1a is a schematic of a carry and sum circuit of a conventional half adder, and Table 1 shows a truth table corresponding to the half adder; and FIG. 1b is a schematic of a carry and sum circuit of a conventional full adder, and Table 2 shows a truth table corresponding to the full adder. Herein, Carry of the half adder=AB, and Carry of the full adder=AB+AC+BC.

**Table 1**

| A | B | Sum | Carry |
|---|---|---|---|
| 0 | 0 | 0 | 0 |
| 0 | 1 | 1 | 0 |
| 1 | 0 | 1 | 0 |
| 1 | 1 | 0 | 1 |

**Table 2**

| A | B | C | Sum | Carry |
|---|---|---|---|---|
| 0 | 0 | 0 | 0 | 0 |
| 0 | 1 | 0 | 1 | 0 |
| 1 | 0 | 0 | 1 | 0 |
| 1 | 1 | 0 | 0 | 1 |
| 0 | 0 | 1 | 1 | 0 |
| 0 | 1 | 1 | 0 | 1 |
| 1 | 0 | 1 | 0 | 1 |
| 1 | 1 | 1 | 1 | 0 |

With development of algorithms and chip technologies, it is increasingly important to improve performance, efficiency and reliability of adders. It is found in this application that, redundant number coding (redundant number coding, RNC) can improve a number representation and computational process by introducing redundant information, thereby reducing or avoiding frequent carry operations in a conventional adder, and increasing a computing speed. Based on redundant number coding, problems such as reducing a quantity of carry operations, improving operation efficiency of the adder, and reducing power consumption are further resolved through a customized circuit design.

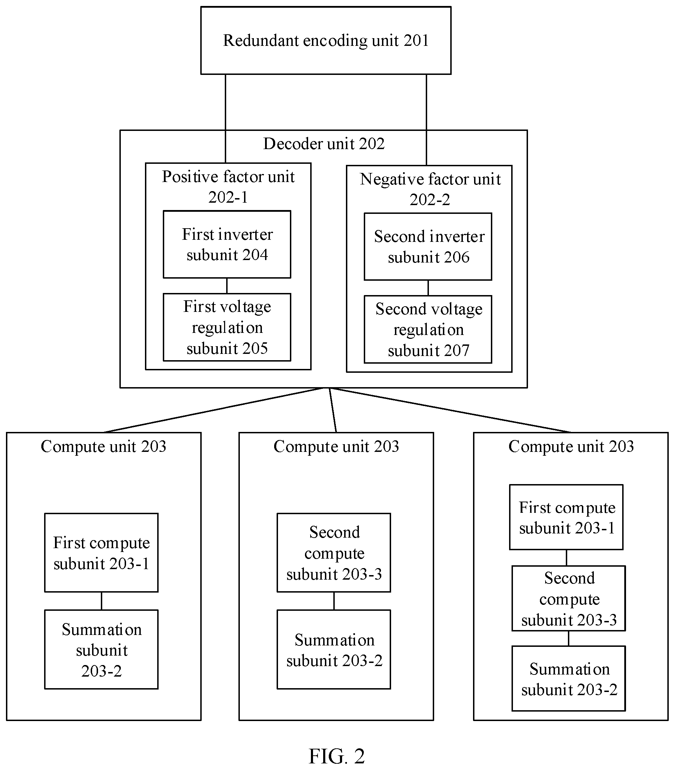

FIG. 2 shows an adder according to an embodiment of this application. The adder includes a redundant encoding unit 201, a decoder unit 202, and a compute unit 203. The redundant encoding unit 201 is connected to each of the decoder unit 202 and the compute unit 203, and the decoder unit 202 is further connected to the compute unit 203.

When a first target number input into the adder is a signed number and a second target number input into the adder is an unsigned number, after performing redundant encoding on each of the first target number and the second target number, the redundant encoding unit 201 sends a redundant encoding result of the first target number to the decoder unit 202, and sends a redundant encoding result of the second target number to the compute unit 203.

When a first target number and a second target number that are input into the adder are signed numbers, after performing redundant encoding on each of the first target number and the second target number, the redundant encoding unit 201 sends both a redundant encoding result of the first target number and a redundant encoding result of the second target number to the decoder unit 202.

Optionally, in a process in which the redundant encoding unit 201 performs redundant encoding on each of the first target number and the second target number that are input into the adder, the redundant encoding unit 201 first needs to determine a redundant encoding radix, and then obtains respective redundant encoding results of the first target number and the second target number based on the determined redundant encoding radix. For example, it is assumed that the redundant encoding radix is 3. For a decimal number -3, because -1*4+0*2+1=-3, a redundant encoding result of -3 can be represented by (-1 0 1). For a decimal number 6, because 1*4+1*2+0=6, a redundant encoding result of 6 can be represented by (1 1 0). Herein, the redundant encoding result of -3 may also be represented by (-1 -1 0). This is merely an example for description herein. In an actual application process, a representation of the redundant encoding result may be determined based on a redundancy characteristic of a redundant number system (redundant number system, RNS).

After the respective redundant encoding results of the first target number and the second target number are determined, when the first target number input into the adder is a signed number and the second target number input into the adder is an unsigned number, the decoder unit 202 decodes the redundant encoding result of the first target number to obtain a first differential pair set. Herein, the first differential pair set may include a plurality of first factor pairs, and each first factor pair may include one first positive factor and one first negative factor. Then, the decoder unit 202 sends the first differential pair set to the compute unit 203. When the first target number and the second target number that are input into the adder are signed numbers, the decoder unit 202 decodes the redundant encoding result of the first target number to obtain a first differential pair set, and decodes the redundant encoding result of the second target number to obtain a second differential pair set. Herein, the second differential pair set may include a plurality of second factor pairs, and each second factor pair may include one second positive factor and one second negative factor. Then, the decoder unit 202 sends the first differential pair set and the second differential pair set to the compute unit 203. It should be learned that, only an example is provided herein to describe a manner of representing the first differential pair set and the second differential pair set, and a specific manner of representing the first differential pair set and the second differential pair set is not limited in this application.

As shown in Table 3, a redundant number in a form of a differential pair is represented by X=X⁺-X⁻. For example, a signed number xᵢ is represented as xᵢ=xᵢ⁺-xᵢ⁻, where if xᵢ⁺∈{0, 1} and xᵢ⁻∈{0, 1}, xᵢ∈{-1, 0, 1}. When xᵢ=0, xᵢ⁺=xᵢ⁻=0 or 1. Alternatively, a signed number xᵢ may be represented as xᵢ=xᵢ⁺+xᵢ⁻, where xᵢ⁺∈{0, 1}, xᵢ⁻∈{0, -1}, and xᵢ∈{-1, 0, 1}. A signed number -3 is used as an example for description. A form of a differential pair of -3 may be represented as {x₂⁺=0, x₂⁻=1}, {x₁⁺=1, x₁⁻=1}, and {x₀⁺=1, x₀⁻=0}. A redundant number of an unsigned number xᵢ is represented by the unsigned number xᵢ itself, that is, xᵢ=xᵢ⁺. When xᵢ⁺∈{0, 1}, xᵢ∈{0, 1}.

**Table 3**

| X | Digit | Value range | Compute form |
|---|---|---|---|
| Signed number | xᵢ | (-1, 0, 1) | xᵢ=xᵢ⁺-xᵢ⁻ |
| | xᵢ⁺ | {0, 1} | |
| | xᵢ⁻ | {1, 0} | |
| Unsigned number | xᵢ | {0, 1} | xᵢ=xᵢ⁺ |
| | xᵢ⁺ | {0, 1} | |

For example, the decoder unit 202 may include a positive factor unit 202-1 and a negative factor unit 202-2, so that the signed number in Table 3 may be represented in a form of a differential pair. When the first target number is a signed number, the positive factor unit 202-1 decodes the redundant encoding result of the first target number to obtain a plurality of first positive factors in the first differential pair set; and the negative factor unit 202-2 decodes the redundant encoding result of the first target number to obtain a plurality of first negative factors in the first differential pair set.

Similarly, when the second target number is a signed number, the positive factor unit 202-1 decodes the redundant encoding result of the second target number to obtain a plurality of second positive factors in the second differential pair set; and the negative factor unit 202-2 decodes the redundant encoding result of the second target number to obtain a plurality of second negative factors in the second differential pair set.

Further, the positive factor unit 202-1 may include a first inverter subunit 204 and a first voltage regulation subunit 205, and the first inverter subunit 204 is connected to the first voltage regulation subunit 205. The first inverter subunit 204 determines an output voltage value of the first inverter subunit 204 based on the redundant encoding result of the first target number and a voltage value at which the first inverter subunit 204 is connected, and then sends the output voltage value of the first inverter subunit 204 to the first voltage regulation subunit 205. The first voltage regulation subunit 205 determines the plurality of first positive factors in the first differential pair set based on the output voltage value of the first inverter subunit 204.

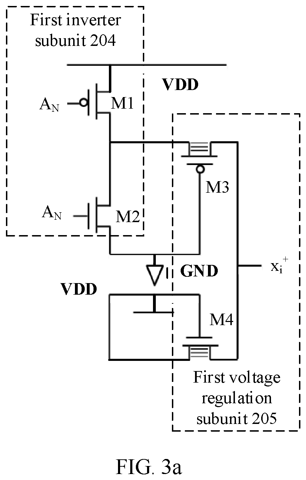

For example, a circuit module constructed by using a multi-voltage threshold (multi-voltage threshold, MVT) transistor is used to extract a differential positive factor xᵢ⁺. As shown in FIG. 3a, the first inverter subunit 204 includes a first low threshold transistor M1, a second low threshold transistor M2, and a negative ternary inverter (negative ternary inverter, NTI) (not shown in the figure), and the first voltage regulation subunit 205 includes a first intermediate threshold transistor M3 and a second intermediate threshold transistor M4. xᵢ in Table 4 is represented by A, and A_{N} represents an output value after xᵢ passes through the NTI.

An input of the negative ternary inverter is the redundant encoding result of the first target number, an output end of the negative ternary inverter is connected to a first electrode of M1 and a first electrode of M2, a third electrode of M1 is connected to a second electrode of M2 and a second electrode of M3, a third electrode of M2 and a first electrode of M3 are grounded, a second electrode of M1 and a first electrode and a third electrode of M4 are connected to a high-voltage VDD, and a third electrode of M3 is connected to a second electrode of M4 and is an output end of the positive factor unit 202-1. M1 and M3 may be P-channel metal oxide semiconductor field effect (positive channel metal oxide semiconductor, PMOS) transistors, and M2 and M4 may be N-channel metal oxide semiconductor field effect (negative channel metal oxide semiconductor, NMOS) transistors.

Herein, the first electrode of M1, the first electrode of M2, the first electrode of M3, and the first electrode of M4 are all gates of the transistors, the second electrode of M1, the second electrode of M2, the second electrode of M3, and the second electrode of M4 are all drains of the transistors, and the third electrode of M1, the third electrode of M2, the third electrode of M3, and the third electrode of M4 are all sources of the transistors.

A circuit diagram shown in FIG. 3a is used as an example for description. As shown in Table 4, assuming that the redundant encoding result of the first target number is xᵢ∈{-1, 0, 1}, when the input of the NTI is 0 or 1, an output of the positive factor unit 202-1 is 1, that is, the first positive factor is xᵢ⁺=1; or when the input of the NTI is - 1, an output of the positive factor unit 202-1 is 0, that is, the first positive factor is xᵢ⁺=0.

**Table 4**

| xᵢ | xᵢ⁺ | xᵢ⁻ |
|---|---|---|
| -1 | 0 | -1 |
| 0 | 1 | -1 |
| 1 | 1 | 0 |

Similarly, the negative factor unit 202-2 includes a second inverter subunit 206 and a second voltage regulation subunit 207, and the second inverter subunit 206 is connected to the second voltage regulation subunit 207. The second inverter subunit 206 determines an output voltage value of the second inverter subunit 206 based on the redundant encoding result of the first target number and a voltage value at which the second inverter subunit 206 is connected, and then sends the output voltage value of the second inverter subunit 206 to the second voltage regulation subunit 207. The second voltage regulation subunit 207 determines the plurality of first negative factors in the first differential pair set based on the output voltage value of the second inverter subunit.

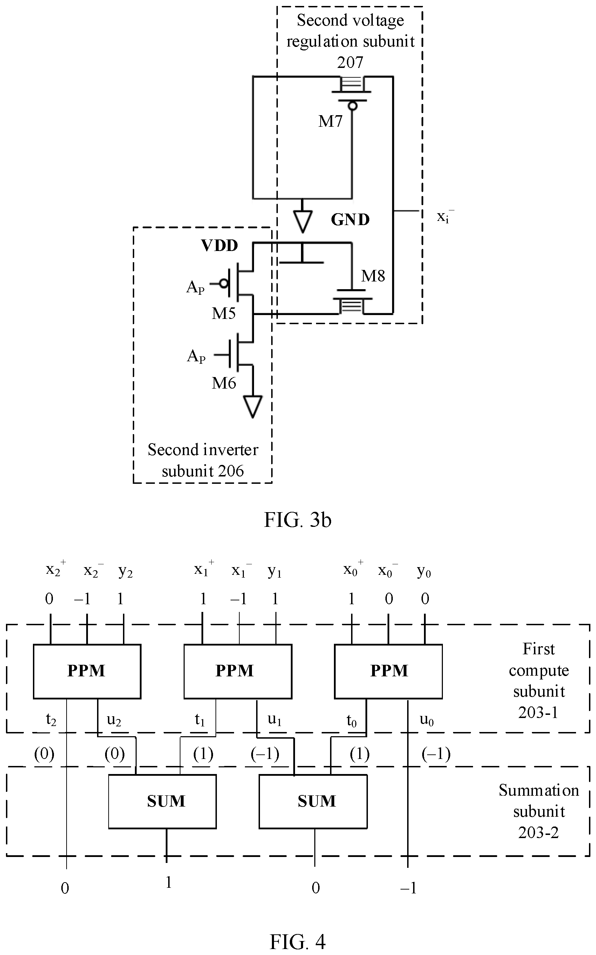

For example, a circuit module constructed by using a multi-voltage threshold transistor is used to extract a differential negative factor xᵢ⁻. As shown in FIG. 3b, the second inverter subunit 206 includes a third low threshold transistor M5, a fourth low threshold transistor M6, and a positive ternary inverter (positive ternary inverter, PTI) (not shown in the figure), and the second voltage regulation subunit 207 includes a third intermediate threshold transistor M7 and a fourth intermediate threshold transistor M8. xᵢ in Table 4 is represented by A, and A_{P} represents an output value after xᵢ passes through the PTI.

An input of the positive ternary inverter is the redundant encoding result of the first target number, an output end of the positive ternary inverter is connected to a first electrode of M5 and a first electrode of M6, a second electrode of M5 and a first electrode of M7 are connected to a high-voltage VDD, a third electrode of M5 is connected to a second electrode of M6 and a third electrode of M7, a third electrode of M6 and a first electrode and a second electrode of M8 are grounded, and a second electrode of M7 is connected to a third electrode of M8 and is an output end of the negative factor unit 202-2. M5 and M7 may be PMOS transistors, and M6 and M8 may be NMOS transistors.

Herein, the first electrode of M5, the first electrode of M6, the first electrode of M7, and the first electrode of M8 are all gates of the transistors, the second electrode of M5, the second electrode of M6, the second electrode of M7, and the second electrode of M8 are all drains of the transistors, and the third electrode of M5, the third electrode of M6, the third electrode of M7, and the third electrode of M8 are all sources of the transistors.

A circuit diagram shown in FIG. 3b is used as an example for description. As shown in Table 4, assuming that the redundant encoding result of the first target number is xᵢ∈{-1, 0, 1}, when the input of the PTI is 0 or -1, an output of the negative factor unit 202-2 is -1, that is, the first negative factor is xᵢ⁻=-1; or when the input of the PTI is 1, an output of the negative factor unit 202-2 is 0, that is, the first negative factor is xᵢ⁻=0.

It can be learned from the foregoing description that a circuit solution of designing the decoder unit 202 in the redundant number adder by using the multi-voltage threshold transistor can reduce hardware complexity. After the circuit solution in which the decoder unit 202 is designed by using the multi-voltage threshold transistor, a differential pair corresponding to the signed number can be obtained, and then the differential pair is sent to the compute unit 203. For example, when the first target number input into the adder is a signed number and the second target number input into the adder is an unsigned number, the compute unit 203 computes and outputs, based on the first differential pair set and the redundant encoding result of the second target number, a sum of the first target number and the second target number or a difference between the first target number and the second target number. When the first target number and the second target number that are input into the adder are signed numbers, the compute unit 203 computes and outputs, based on the first differential pair set and the second differential pair set, a sum of the first target number and the second target number, or a difference between the first target number and the second target number.

In a possible embodiment, the compute unit 203 includes a first compute subunit 203-1 and a summation subunit 203-2. When the first target number is a signed number and the second target number is an unsigned number, the first compute subunit 203-1 determines a first intermediate value and a second intermediate value based on any first positive factor in the first differential pair set, a first negative factor corresponding to the first positive factor, and a value corresponding to the first positive factor in the redundant encoding result of the second target number; and sends a plurality of first intermediate values and a plurality of second intermediate values to the summation subunit 203-2; and the summation subunit 203-2 computes the sum of the first target number and the second target number based on the plurality of first intermediate values and the plurality of second intermediate values.

For example, it is assumed that the first target number x is -3, and the second target number y is 6. Redundant encoding is performed on the first target number x in a compute form of xᵢ=xᵢ⁺-xᵢ⁻, to learn that xᵢ∈{-1, 0, 1}, xᵢ⁺∈{0, 1}, and xᵢ⁻∈{0, -1}. Redundant encoding is performed on the second target number y in a compute form of yᵢ=yᵢ⁺, to learn that yᵢ∈{0, 1}, and yᵢ⁺∈{0, 1}. As shown in FIG. 4, each first factor pair in the first differential pair set and the redundant encoding result of the second target number are arranged based on x₂⁺, x₂⁻, y₂, x₁⁺, x₁⁻, y₁, x₀⁺, x₀⁻, and y₀. To be specific, the first compute subunit 203-1 determines a first intermediate value t₂ and a second intermediate value u₂ based on a first positive factor x₂⁺ in the first differential pair set, a first negative factor x₂⁻corresponding to the first positive factor x₂⁺, and a value y₂ corresponding to the first positive factor x₂⁺ in the redundant encoding result of the second target number; the first compute subunit 203-1 determines a first intermediate value t₁ and a second intermediate value u₁ based on a first positive factor x₁⁺ in the first differential pair set, a first negative factor x₁⁻ corresponding to the first positive factor x₁⁺, and a value y₁ corresponding to the first positive factor x₁⁺ in the redundant encoding result of the second target number; and the first compute subunit 203-1 determines a first intermediate value t₀ and a second intermediate value u₀ based on a first positive factor x₀⁺ in the first differential pair set, a first negative factor x₀⁻ corresponding to the first positive factor x₀⁺, and a value y₀ corresponding to the first positive factor x₀⁺ in the redundant encoding result of the second target number.

When a sum of the first target number x and the second target number y is computed, an intermediate sum for each i is first computed in parallel based on the redundant encoding result of the first target number and the redundant encoding result of the second target number: pᵢ=xᵢ+yᵢ∈{-1, 0, 1, 2}, and the intermediate sum pᵢ may also be represented by 2tᵢ+uᵢ, where tᵢ is the first intermediate value, and tᵢ∈{0, 1}; and uᵢ is the second intermediate value, and uᵢ∈{0, -1}. Therefore, the sum corresponding to each i may be represented as sᵢ=tᵢ₋₁+uᵢ∈{-1, 0, 1}. Table 5 shows a truth table of a plus-plus-minus adder (plus-plus-minus adder, PPM), that is, a truth table of xᵢ⁺+xᵢ⁻+yᵢ. Herein, an intermediate sum for each i may also be computed in a target order. This is merely an example for description herein. A specific manner of computing the intermediate sum is not limited in this application.

**Table 5**

| | | | | | | |
|---|---|---|---|---|---|---|
| xᵢ⁺ | 1 | 1 | 0 | 1 | 1 | 0 |
| xᵢ⁻ | 0 | -1 | -1 | 0 | -1 | -1 |
| yᵢ | 1 | 1 | 1 | 0 | 0 | 0 |
| uᵢ | 0 | -1 | 0 | -1 | 0 | -1 |
| tᵢ | 1 | 1 | 0 | 1 | 0 | 0 |
| sᵢ | 2 | 1 | 0 | 1 | 0 | -1 |

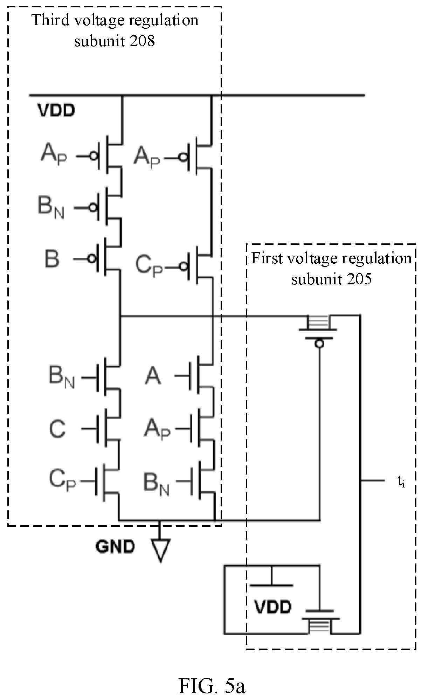

Optionally, as shown in FIG. 5a, each PPM in the first compute subunit 203-1 may further include a first voltage regulation subunit 205 and a third voltage regulation subunit 208, and the third voltage regulation subunit 208 is connected to the first voltage regulation subunit 205. The third voltage regulation subunit 208 determines an output voltage value of the third voltage regulation subunit 208 based on any first positive factor in the first differential pair set, a first negative factor corresponding to the first positive factor, a value corresponding to the first positive factor in the redundant encoding result of the second target number, and a voltage value at which the third voltage regulation subunit 208 is connected, and then sends the output voltage value of the third voltage regulation subunit 208 to the first voltage regulation subunit 205. The first voltage regulation subunit 205 determines the plurality of first intermediate values based on the output voltage value of the third voltage regulation subunit 208.

For example, as shown in FIG. 5a, the third voltage regulation subunit 208 includes a plurality of low threshold transistors, a PTI (not shown in the figure), and an NTI (not shown in the figure). The first voltage regulation subunit 205 includes a first intermediate threshold transistor M3 and a second intermediate threshold transistor M4. A part of the low threshold transistors and M3 may be PMOS transistors, and a part of the low threshold transistors and M4 may be NMOS transistors. Only an example is provided herein to describe composition of components of the third voltage regulation subunit 208 and the first voltage regulation subunit 205. It should be learned that any embodiment in which respective functions of the third voltage regulation subunit 208 and the first voltage regulation subunit 205 can be implemented through component extension and combination falls within the protection scope of this application.

Herein, xᵢ⁺ in Table 5 is represented by A, xᵢ⁻ in Table 5 is represented by B, yᵢ in Table 5 is represented by C, A_{P} represents an output value after xᵢ⁺ passes through the PTI, B_{N} represents an output value after xᵢ⁻ passes through the NTI, and C_{P} represents an output value after yᵢ passes through the PTI.

A circuit diagram shown in FIG. 5a is used as an example for description. As shown in Table 5, when a computed sum of inputs xᵢ⁺, xᵢ⁻, and yᵢ is 2 or 1, the first intermediate value tᵢ is 1, that is, an output value of the first voltage regulation subunit 205 is 1; or when a computed sum of inputs xᵢ⁺, xᵢ⁻, and yᵢ is 0 or -1, the first intermediate value tᵢ is 0, that is, an output value of the first voltage regulation subunit 205 is 0.

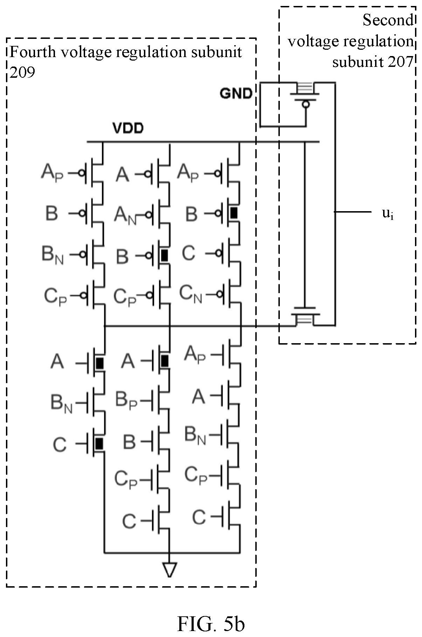

Optionally, as shown in FIG. 5b, each PPM in the first compute subunit 203-1 may further include a second voltage regulation subunit 207 and a fourth voltage regulation subunit 209, and the fourth voltage regulation subunit 209 is connected to the second voltage regulation subunit 207. The fourth voltage regulation subunit 209 determines an output voltage value of the fourth voltage regulation subunit 209 based on any first positive factor in the first differential pair set, a first negative factor corresponding to the first positive factor, a value corresponding to the first positive factor in the redundant encoding result of the second target number, and a voltage value at which the fourth voltage regulation subunit 209 is connected, and then sends the output voltage value of the fourth voltage regulation subunit 209 to the second voltage regulation subunit 207. The second voltage regulation subunit 207 determines the plurality of second intermediate values based on the output voltage value of the fourth voltage regulation subunit 209.

For example, as shown in FIG. 5b, the fourth voltage regulation subunit 209 includes a plurality of low threshold transistors, a plurality of high threshold transistors, a PTI (not shown in the figure), and an NTI (not shown in the figure). The second voltage regulation subunit 207 includes a third intermediate threshold transistor M7 and a fourth intermediate threshold transistor M8. A part of the low threshold transistors, a part of the high threshold transistors, and M7 may be PMOS transistors, and a part of the low threshold transistors, a part of the high threshold transistors, and M8 may be NMOS transistors. Only an example is provided herein to describe composition of components of the fourth voltage regulation subunit 209 and the second voltage regulation subunit 207. It should be learned that any embodiment in which respective functions of the fourth voltage regulation subunit 209 and the second voltage regulation subunit 207 can be implemented through component extension and combination falls within the protection scope of this application.

Herein, xᵢ⁺ in Table 5 is represented by A, xᵢ⁻ in Table 5 is represented by B, yᵢ in Table 5 is represented by C, A_{P} represents an output value after xᵢ⁺ passes through the PTI, A_{N} represents an output value after xᵢ⁺ passes through the NTI, B_{P} represents an output value after xᵢ⁻ passes through the PTI, B_{N} represents an output value after xᵢ⁻passes through the NTI, C_{P} represents an output value after yᵢ passes through the PTI, and C_{N} represents an output value after yᵢ passes through the NTI.

A circuit diagram shown in FIG. 5b is used as an example for description. As shown in Table 5, when a computed sum of inputs xi⁺, xi⁻, and yᵢ is -1 or 1, the second intermediate value uᵢ is -1, that is, an output value of the second voltage regulation subunit 207 is -1; or when a computed sum of inputs xi⁺, xi⁻, and yᵢ is 0 or 2, the second intermediate value uᵢ is 0, that is, an output value of the second voltage regulation subunit 207 is 0.

In a possible embodiment, the compute unit 203 includes a second compute subunit 203-3 and a summation subunit 203-2. When the first target number is a signed number and the second target number is an unsigned number, the second compute subunit 203-3 determines a third intermediate value and a fourth intermediate value based on any first positive factor in the first differential pair set, a first negative factor corresponding to the first positive factor, and a value corresponding to the first positive factor in the redundant encoding result of the second target number; and sends a plurality of third intermediate values and a plurality of fourth intermediate values to the summation subunit 203-2; and the summation subunit 203-2 computes the difference between the first target number and the second target number based on the plurality of third intermediate values and the plurality of fourth intermediate values.

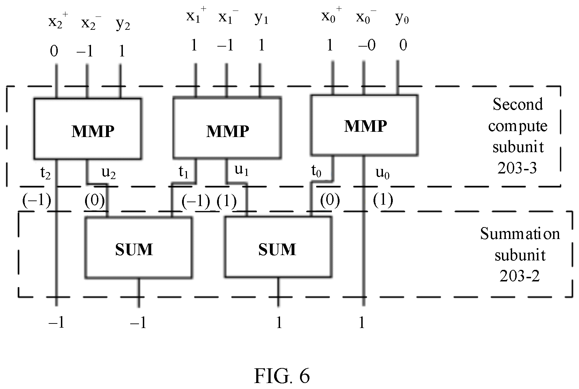

For example, it is assumed that the first target number x is -3, and the second target number y is 6. Redundant encoding is performed on the first target number x in a compute form of xᵢ=xᵢ⁺-xᵢ⁻, to learn that xᵢ∈{-1, 0, 1}, xᵢ⁺∈{0, 1}, and xᵢ⁻∈{0, -1}. Redundant encoding is performed on the second target number y in a compute form of yᵢ=yᵢ⁺, to learn that yᵢ∈{0, 1}, and yᵢ⁺∈{0, 1}. As shown in FIG. 6, each first factor pair in the first differential pair set and the redundant encoding result of the second target number are arranged based on x₂⁺, x₂⁻, y₂, x₁⁺, x₁⁻, y₁, x₀⁺, x₀⁻, and y₀. To be specific, the second compute subunit 203-3 determines a third intermediate value t₂ and a fourth intermediate value u₂ based on a first positive factor x₂⁺ in the first differential pair set, a first negative factor x₂⁻corresponding to the first positive factor x₂⁺, and a value y₂ corresponding to the first positive factor x₂⁺ in the redundant encoding result of the second target number; the second compute subunit 203-3 determines a third intermediate value t₁ and a fourth intermediate value u₁ based on a first positive factor x₁⁺ in the first differential pair set, a first negative factor x₁⁻ corresponding to the first positive factor x₁⁺, and a value y₁ corresponding to the first positive factor x₁⁺ in the redundant encoding result of the second target number; and the second compute subunit 203-3 determines a third intermediate value t₀ and a fourth intermediate value u₀ based on a first positive factor x₀⁺ in the first differential pair set, a first negative factor x₀⁻ corresponding to the first positive factor x₀⁺, and a value y₀ corresponding to the first positive factor x₀⁺ in the redundant encoding result of the second target number.

When a difference between the first target number x and the second target number y is computed, an intermediate sum for each i is first computed in parallel by using the redundant encoding result of the first target number and the redundant encoding result of the second target number: pᵢ=xᵢ-yᵢ∈{-2, -1, 0, 1}, and the intermediate sum pᵢ may also be represented by 2tᵢ+uᵢ, where tᵢ is the third intermediate value, and tᵢ∈{0, -1}; and uᵢ is the fourth intermediate value, and uᵢ∈{0, 1}. Therefore, the sum corresponding to each i may be represented as sᵢ=tᵢ₋₁+uᵢ∈{-1, 0, 1}. Table 6 shows a truth table of a minus-minus-plus adder (minus-minus-plus adder, MMP), that is, a truth table of xᵢ⁺+xᵢ⁻-yᵢ. Herein, an intermediate sum for each i may also be computed in a target order. This is merely an example for description herein. A specific manner of computing the intermediate sum is not limited in this application.

**Table 6**

| | | | | | | |
|---|---|---|---|---|---|---|
| xᵢ⁺ | 1 | 1 | 0 | 1 | 1 | 0 |
| xᵢ⁻ | 0 | -1 | -1 | 0 | -1 | -1 |
| yᵢ | 1 | 1 | 1 | 0 | 0 | 0 |
| uᵢ | 0 | 1 | 0 | 1 | 0 | 1 |
| tᵢ | 0 | -1 | -1 | 0 | 0 | -1 |
| sᵢ | 0 | -1 | -2 | 1 | 0 | -1 |

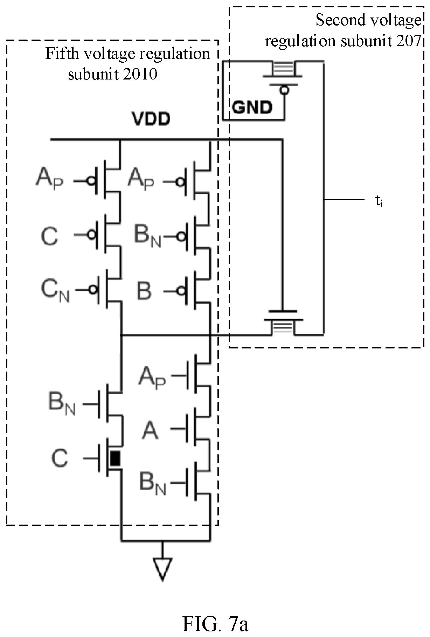

Optionally, as shown in FIG. 7a, each MMP in the second compute subunit 203-3 may include a second voltage regulation subunit 207 and a fifth voltage regulation subunit 2010, and the second voltage regulation subunit 207 is connected to the fifth voltage regulation subunit 2010. The fifth voltage regulation subunit 2010 determines an output voltage value of the fifth voltage regulation subunit 2010 based on any first positive factor in the first differential pair set, a first negative factor corresponding to the first positive factor, a value corresponding to the first positive factor in the redundant encoding result of the second target number, and a voltage value at which the fifth voltage regulation subunit 2010 is connected, and then sends the output voltage value of the fifth voltage regulation subunit 2010 to the second voltage regulation subunit 207. The second voltage regulation subunit 207 determines the plurality of third intermediate values based on the output voltage value of the fifth voltage regulation subunit 2010.

For example, as shown in FIG. 7a, the fifth voltage regulation subunit 2010 includes a plurality of low threshold transistors, one high threshold transistor, a PTI (not shown in the figure), and an NTI (not shown in the figure). The second voltage regulation subunit 207 includes a third intermediate threshold transistor M7 and a fourth intermediate threshold transistor M8. A part of the low threshold transistors and M7 may be PMOS transistors, and a part of the low threshold transistors, the one high threshold transistor, and M8 may be NMOS transistors. Only an example is provided herein to describe composition of components of the fifth voltage regulation subunit 2010 and the second voltage regulation subunit 207. It should be learned that any embodiment in which respective functions of the fifth voltage regulation subunit 2010 and the second voltage regulation subunit 207 can be implemented through component extension and combination falls within the protection scope of this application.

Herein, xᵢ⁺ in Table 6 is represented by A, xᵢ⁻ in Table 6 is represented by B, yᵢ in Table 6 is represented by C, A_{P} represents an output value after xᵢ⁺ passes through the PTI, B_{N} represents an output value after xᵢ⁻ passes through the NTI, and C_{N} represents an output value after yᵢ passes through the NTI.

A circuit diagram shown in FIG. 7a is used as an example for description. As shown in Table 6, when a computed sum of inputs xi⁺, xi⁻, and yᵢ is -2 or -1, the third intermediate value tᵢ is -1, that is, an output value of the second voltage regulation subunit 207 is 1; or when a computed sum of inputs xi⁺, xi⁻, and yᵢ is 0 or 1, the third intermediate value tᵢ is 0, that is, an output value of the second voltage regulation subunit 207 is 0.

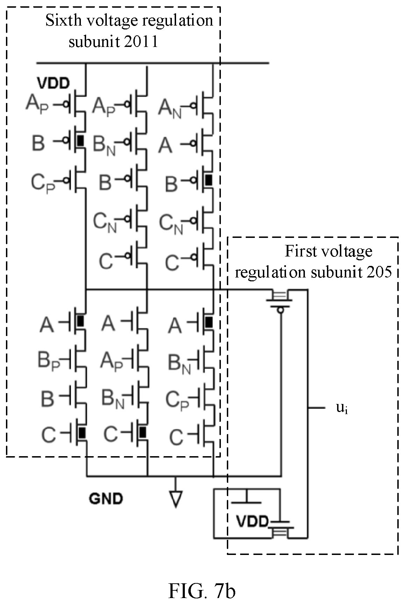

Optionally, as shown in FIG. 7b, each MMP in second compute subunit 203-3 may further include a first voltage regulation subunit 205 and a sixth voltage regulation subunit 2011, and the sixth voltage regulation subunit 2011 is connected to the first voltage regulation subunit 205. The sixth voltage regulation subunit 2011 determines an output voltage value of the sixth voltage regulation subunit 2011 based on any first positive factor in the first differential pair set, a first negative factor corresponding to the first positive factor, a value corresponding to the first positive factor in the redundant encoding result of the second target number, and a voltage value at which the sixth voltage regulation subunit 2011 is connected, and then sends the output voltage value of the sixth voltage regulation subunit 2011 to the first voltage regulation subunit 205. The first voltage regulation subunit 205 determines the plurality of fourth intermediate values based on the output voltage value of the sixth voltage regulation subunit 2011.

For example, as shown in FIG. 7b, the sixth voltage regulation subunit 2011 includes a plurality of low threshold transistors, a plurality of high threshold transistors, a PTI (not shown in the figure), and an NTI (not shown in the figure). The first voltage regulation subunit 205 includes a first intermediate threshold transistor M3 and a second intermediate threshold transistor M4. A part of the low threshold transistors, a part of the high threshold transistors, and M3 may be PMOS transistors, and a part of the low threshold transistors, a part of the high threshold transistors, and M4 may be NMOS transistors. Only an example is provided herein to describe composition of components of the sixth voltage regulation subunit 2011 and the first voltage regulation subunit 205. It should be learned that any embodiment in which respective functions of the sixth voltage regulation subunit 2011 and the first voltage regulation subunit 205 can be implemented through component extension and combination falls within the protection scope of this application.

Herein, xᵢ⁺ in Table 6 is represented by A, xᵢ⁻ in Table 6 is represented by B, yᵢ in Table 6 is represented by C, A_{P} represents an output value after xᵢ⁺ passes through the PTI, A_{N} represents an output value after xᵢ⁺ passes through the NTI, B_{P} represents an output value after xᵢ⁻ passes through the PTI, B_{N} represents an output value after xᵢ⁻passes through the NTI, C_{P} represents an output value after yᵢ passes through the PTI, and C_{N} represents an output value after yᵢ passes through the NTI.

A circuit diagram shown in FIG. 7b is used as an example for description. As shown in Table 6, when a computed sum of inputs xi⁺, xi⁻, and yᵢ is -1 or 1, the fourth intermediate value uᵢ is 1, that is, an output value of the first voltage regulation subunit 205 is 1; or when a computed sum of inputs xi⁺, xi⁻, and yᵢ is 0 or 2, the fourth intermediate value uᵢ is 0, that is, an output value of the first voltage regulation subunit 205 is 0.

In a possible embodiment, the compute unit 203 includes a first compute subunit 203-1, a second compute subunit 203-3, and a summation subunit 203-2. When both the first target number and the second target number are signed numbers, the first compute subunit 203-1 determines a fifth intermediate value and a sixth intermediate value based on any first positive factor in the first differential pair set, a first negative factor corresponding to the first positive factor, and a second positive factor corresponding to the first positive factor in the second differential pair set, and then sends a plurality of fifth intermediate values and a plurality of sixth intermediate values to the second compute subunit 203-3; the second compute subunit 203-3 determines a seventh intermediate value and an eighth intermediate value based on any second negative factor in the second differential pair set, a fifth intermediate value corresponding to the second negative factor, and a sixth intermediate value corresponding to the second negative factor; and sends a plurality of seventh intermediate values and a plurality of eighth intermediate values to the summation subunit 203-2; and the summation subunit 203-2 computes the sum of the first target number and the second target number based on the plurality of seventh intermediate values and the plurality of eighth intermediate values.

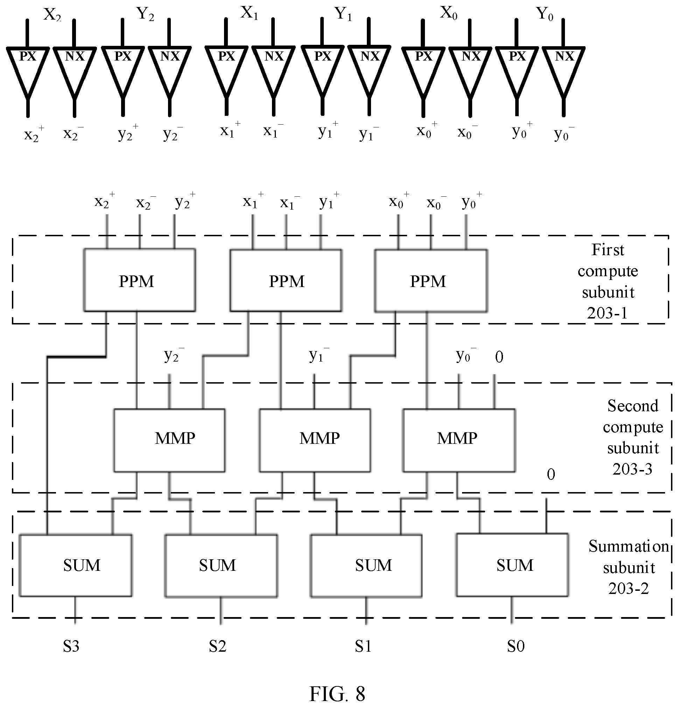

For example, it can be learned from the foregoing two embodiments that, as shown in FIG. 8, after redundant encoding is performed on each of signed numbers X and Y, respective redundant encoding results each pass through the positive factor unit 202-1 (represented by PX in FIG. 8) and the negative factor unit 202-2 (represented by NX in FIG. 8) in the decoder unit 202, to obtain a first differential pair set and a second differential pair set. Each first factor pair in the first differential pair set and each second factor pair in the second differential pair set are arranged based on x₂⁺, x₂⁻, y₂⁺, y₂⁻, x₁⁺, x₁⁻, y₁⁺, y₁⁻, x₀⁺, x₀⁻, y₀⁺, and y₀⁻. To be specific, the first compute subunit 203-1 determines a fifth intermediate value t₂ and a sixth intermediate value u₂ based on a first positive factor x₂⁺ in the first differential pair set, a first negative factor x₂⁻ corresponding to the first positive factor x₂⁺, and a second positive factor y₂⁺ corresponding to the first positive factor x₂⁺ in the second differential pair set; the first compute subunit 203-1 determines a fifth intermediate value t₁ and a sixth intermediate value u₁ based on a first positive factor x₁⁺ in the first differential pair set, a first negative factor x₁⁻ corresponding to the first positive factor x₁⁺, and a second positive factor y₁⁺ corresponding to the first positive factor x₁⁺ in the second differential pair set; and the first compute subunit 203-1 determines a fifth intermediate value t₀ and a sixth intermediate value u₀ based on a first positive factor x₀⁺ in the first differential pair set, a first negative factor x₀⁻ corresponding to the first positive factor x₀⁺, and a second positive factor y₀⁺ corresponding to the first positive factor x₀⁺ in the second differential pair set. Herein, for a specific computing manner, refer to the embodiment corresponding to Table 5. Details are not described herein again.

The second compute subunit 203-3 determines a seventh intermediate value t₃ and an eighth intermediate value u₃ based on a second negative factor y₂⁻ in the second differential pair set, a fifth intermediate value t₁ corresponding to the second negative factor y₂⁻, and a sixth intermediate value u₂ corresponding to the second negative factor; the second compute subunit 203-3 determines a seventh intermediate value t₄ and an eighth intermediate value u₄ based on a second negative factor y₁⁻ in the second differential pair set, a fifth intermediate value t₀ corresponding to the second negative factor y₁⁻, and a sixth intermediate value u₁ corresponding to the second negative factor; and the second compute subunit 203-3 determines a seventh intermediate value t₅ and an eighth intermediate value u₅ based on a second negative factor y₀⁻ in the second differential pair set, a sixth intermediate value u₀ corresponding to the second negative factor, and 0. Herein, for a specific computing manner, refer to the embodiment corresponding to Table 6. Because inputs of the MMP have more data combinations than the inputs in the embodiment corresponding to Table 6, in this embodiment, Table 7 is used as a truth table of the MMP in this embodiment.

**Table 7**

| | | | | | | | | |
|---|---|---|---|---|---|---|---|---|
| xᵢ⁺ | 1 | 1 | 0 | 1 | 1 | 0 | 0 | 0 |
| xᵢ⁻ | -0 | -1 | -1 | -0 | -1 | -1 | 0 | 0 |
| yᵢ | -1 | -1 | -1 | 0 | 0 | 0 | -1 | 0 |
| uᵢ | 0 | 1 | 0 | 1 | 0 | 1 | 1 | 0 |
| tᵢ | 0 | -1 | -1 | 0 | 0 | -1 | -1 | 0 |

In conclusion, in this application, the redundant number in the form of the differential pair is used for representation, to implement efficient encoding and decoding of the redundant number system, thereby improving encoding and decoding efficiency; various compute modules in the redundant number adder are designed by using the multi-voltage threshold transistor, thereby reducing hardware complexity; and a combination and extension of a plurality of compute submodules are designed, to implement design of a high bit-width carry-free adder, for example, a signed number+unsigned number adder, a signed number-unsigned number adder, and a signed number+signed number adder. In addition, in a redundant number system in the conventional technology, presence of redundancy results in a large data bit width, and therefore a relatively large circuit area/relatively high power consumption overheads are needed to implement a computational function. For example, in a process of processing data such as - 2, -1, and 2, at least a 2-bit data bit width and circuit overheads are needed. In the circuit solution of the adder in this application, a computational function can be implemented by using a 1-bit bit width, thereby reducing circuit complexity and power consumption. In addition, the carry-free adder designed in this application further has a fixed low transmission delay, and is not affected by a bit width. As shown in Table 8, compared with a conventional redundant encoding addition solution, this application can reduce power consumption by 45%.

**Table 8**

| Power consumption/Frequency | Signed INT8 number+Unsigned INT8 number | Signed INT8 number-Unsigned INT8 number | Signed INT8 number+Signed INT8 number |
|---|---|---|---|
| Conventional redundant encoding addition scheme | 0.2425 µW/MHz | 0.2425 µW/MHz | 0.505 µW/MHz |
| This application | 0.134 µW/MHz | 0.135 µW/MHz | 0.2725 µW/MHz |
| Reduction of power consumption | 44.7% off | 44.4% off | 46.0% off |

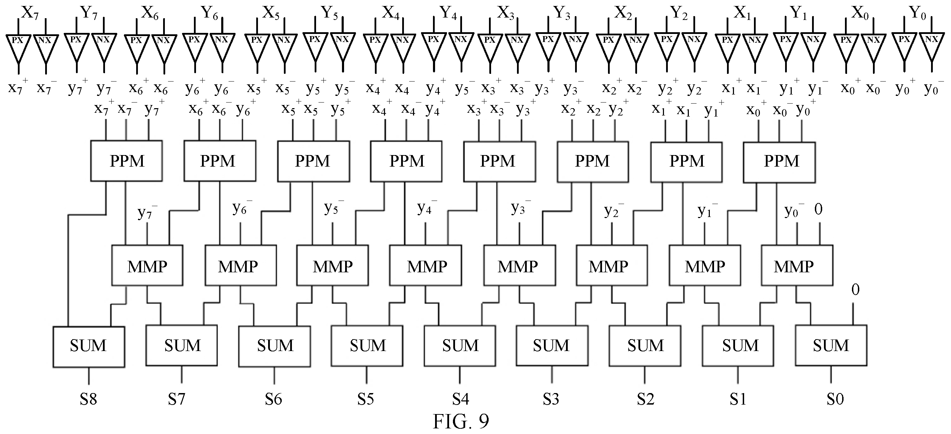

In an embodiment of this application, FIG. 9 shows a circuit solution of signed INT8 number+signed INT8 number. After redundant encoding is performed on each of signed numbers X and Y, respective redundant encoding results each pass through the positive factor unit 202-1 (represented by PX in FIG. 9) and the negative factor unit 202-2 (represented by NX in FIG. 9) in the decoder unit 202, to obtain a first differential pair set and a second differential pair set. Then, a first positive factor and a first negative factor of each bit of X and a second positive factor of each bit of Y are input into a PPM of the corresponding bit to compute a plurality of fifth intermediate values and a plurality of sixth intermediate values. Then, a sixth intermediate value of a PPM of any bit, a second negative factor of the corresponding bit of Y, and a fifth intermediate value of a PPM of a lower 1 bit are input into an MMP of the corresponding bit to compute a plurality of seventh intermediate values and a plurality of eighth intermediate values. Finally, an addition operation is performed on an eighth intermediate value of an MMP of any bit and a seventh intermediate value of an MMP of a lower 1 bit, to obtain a sum of the signed numbers X and Y. Herein, in a computational process, 0 is used for padding when there is no seventh intermediate value of the MMP of the lower 1 bit. A most significant bit output value is obtained by performing an addition operation on a fifth intermediate value of a PPM of a most significant bit and a seventh intermediate value of an MMP of a most significant bit.

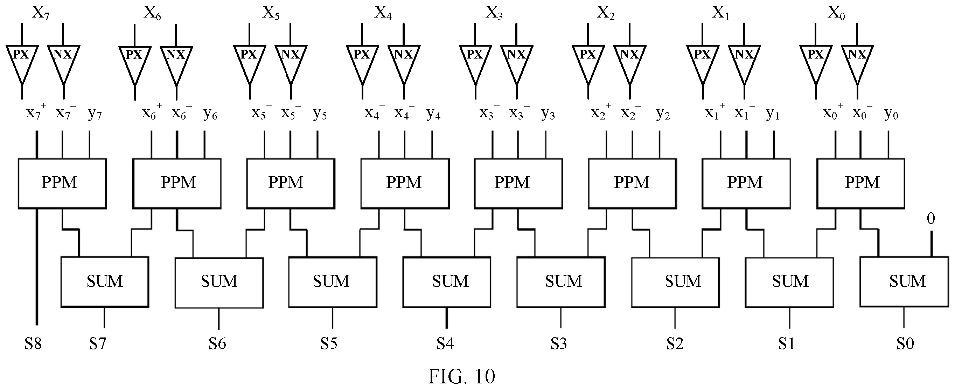

In an embodiment of this application, FIG. 10 shows a circuit solution of signed INT8 number+unsigned INT8 number. After redundant encoding is performed on each of a signed number X and an unsigned number Y, a redundant encoding result of X passes through the positive factor unit 202-1 (represented by PX in FIG. 10) and the negative factor unit 202-2 (represented by NX in FIG. 10) in the decoder unit 202, to obtain a first differential pair set. For subsequent steps, refer to the descriptions of the embodiment corresponding to FIG. 4. Details are not described herein again.

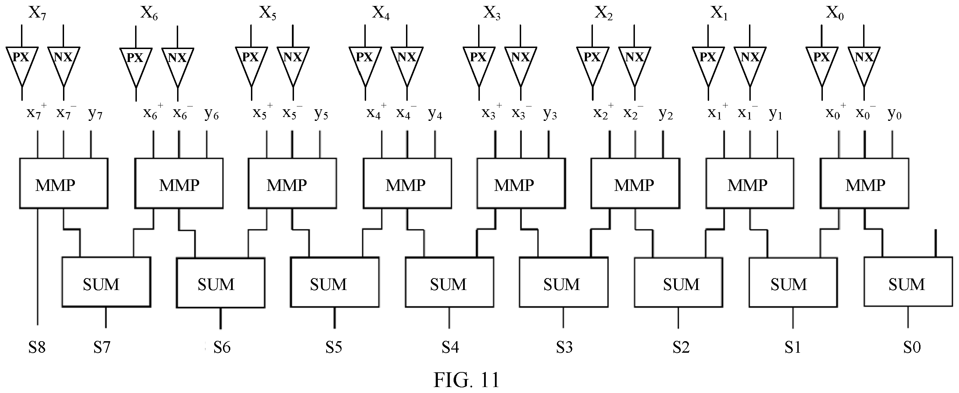

In an embodiment of this application, FIG. 11 shows a circuit solution of signed INT8 number-unsigned INT8 number. After redundant encoding is performed on each of a signed number X and an unsigned number Y, a redundant encoding result of X passes through the positive factor unit 202-1 (represented by PX in FIG. 11) and the negative factor unit 202-2 (represented by NX in FIG. 11) in the decoder unit 202, to obtain a first differential pair set. For subsequent steps, refer to descriptions of the embodiments corresponding to FIG. 5a and FIG. 5b. Details are not described herein again.

The adder provided in embodiments of this application may be applied to an application scenario such as a signed adder tree, a signed multiplier, a multiplication accumulator, a precise computing circuit and chip, an approximate computing circuit and chip, and a neural network algorithm acceleration artificial intelligence (artificial intelligence, AI) chip.

An embodiment of this application further provides a chip, including the adder described in any one of the foregoing embodiments.

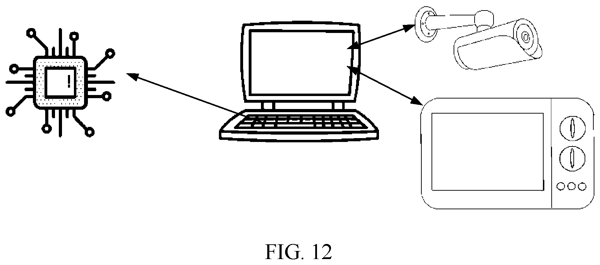

An embodiment of this application further provides an electronic device, including a circuit board and the chip described in any one of the foregoing embodiments, where the chip is disposed on the circuit board. The chip including the adder provided in the foregoing embodiment of this application may be applied to various possible electronic devices. A specific type of the electronic device is not limited in this application. For example, the electronic device may be a compute device with computational power, or may be a terminal device or a server with a data processing function. As shown in FIG. 12, an example in which the electronic device is a terminal computer with a data processing function is used for description. The AI chip integrated with the adder in the foregoing embodiment is disposed on a circuit board in the terminal computer, and the terminal computer may exchange data with at least one data collection device. After obtaining data collected by each data collection device, the terminal computer may perform data computing on the collected data by using an adder. The data collection device herein may be a product such as a camera, a washing machine, a refrigerator, or a microwave oven.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An adder, comprising: a redundant encoding unit, a decoder unit, and a compute unit, wherein the redundant encoding unit is connected to each of the decoder unit and the compute unit, and the decoder unit is further connected to the compute unit;
the redundant encoding unit is configured to: perform redundant encoding on each of a first target number and a second target number that are input into the adder; and when the first target number is a signed number and the second target number is an unsigned number, send a redundant encoding result of the first target number to the decoding unit, and send a redundant encoding result of the second target number to the compute unit;
the decoder unit is configured to: decode the redundant encoding result of the first target number to obtain a first differential pair set; and send the first differential pair set to the compute unit; and
the compute unit is configured to: compute and output, based on the first differential pair set and the redundant encoding result of the second target number, a sum of the first target number and the second target number, or a difference between the first target number and the second target number.

2. The adder according to claim 1, wherein the decoder unit comprises a positive factor unit and a negative factor unit;
the positive factor unit is configured to decode the redundant encoding result of the first target number, to obtain a plurality of first positive factors in the first differential pair set; and
the negative factor unit is configured to decode the redundant encoding result of the first target number, to obtain a plurality of first negative factors in the first differential pair set, wherein
each first positive factor and a corresponding first negative factor are determined based on values of same bits in the redundant encoding result of the first target number.

3. The adder according to claim 2, wherein the positive factor unit comprises a first inverter subunit and a first voltage regulation subunit, and the first inverter subunit is connected to the first voltage regulation subunit;
the first inverter subunit is configured to: determine an output voltage value of the first inverter subunit based on the redundant encoding result of the first target number and a voltage value at which the first inverter subunit is connected; and send the output voltage value of the first inverter subunit to the first voltage regulation subunit; and
the first voltage regulation subunit is configured to determine the plurality of first positive factors in the first differential pair set based on the output voltage value of the first inverter subunit.

4. The adder according to claim 2 or 3, wherein the negative factor unit comprises a second inverter subunit and a second voltage regulation subunit, and the second inverter subunit is connected to the second voltage regulation subunit;
the second inverter subunit is configured to: determine an output voltage value of the second inverter subunit based on the redundant encoding result of the first target number and a voltage value at which the second inverter subunit is connected; and send the output voltage value of the second inverter subunit to the second voltage regulation subunit; and
the second voltage regulation subunit is configured to determine the plurality of first negative factors in the first differential pair set based on the output voltage value of the second inverter subunit.

5. The adder according to any one of claims 1 to 4, wherein the compute unit comprises a first compute subunit and a summation subunit, and when the first target number is a signed number and the second target number is an unsigned number,
the first compute subunit is configured to: determine a first intermediate value and a second intermediate value based on any first positive factor in the first differential pair set, a first negative factor corresponding to the first positive factor, and a value corresponding to the first positive factor in the redundant encoding result of the second target number; and send a plurality of first intermediate values and a plurality of second intermediate values to the summation subunit; and
the summation subunit is configured to compute the sum of the first target number and the second target number based on the plurality of first intermediate values and the plurality of second intermediate values.

6. The adder according to claim 5, wherein the first compute subunit comprises a first voltage regulation subunit and a third voltage regulation subunit, and the third voltage regulation subunit is connected to the first voltage regulation subunit;
the third voltage regulation subunit is configured to: determine an output voltage value of the third voltage regulation subunit based on any first positive factor in the first differential pair set, a first negative factor corresponding to the first positive factor, a value corresponding to the first positive factor in the redundant encoding result of the second target number, and a voltage value at which the third voltage regulation subunit is connected; and send the output voltage value of the third voltage regulation subunit to the first voltage regulation subunit; and
the first voltage regulation subunit is configured to determine the plurality of first intermediate values based on the output voltage value of the third voltage regulation subunit.

7. The adder according to claim 5 or 6, wherein the first compute subunit further comprises a second voltage regulation subunit and a fourth voltage regulation subunit, and the fourth voltage regulation subunit is connected to the second voltage regulation subunit;
the fourth voltage regulation subunit is configured to: determine an output voltage value of the fourth voltage regulation subunit based on any first positive factor in the first differential pair set, a first negative factor corresponding to the first positive factor, a value corresponding to the first positive factor in the redundant encoding result of the second target number, and a voltage value at which the fourth voltage regulation subunit is connected; and send the output voltage value of the fourth voltage regulation subunit to the second voltage regulation subunit; and
the second voltage regulation subunit is configured to determine the plurality of second intermediate values based on the output voltage value of the fourth voltage regulation subunit.

8. The adder according to any one of claims 1 to 4, wherein the compute unit comprises a second compute subunit and a summation subunit, and when the first target number is a signed number and the second target number is an unsigned number,
the second compute subunit is configured to: determine a third intermediate value and a fourth intermediate value based on any first positive factor in the first differential pair set, a first negative factor corresponding to the first positive factor, and a value corresponding to the first positive factor in the redundant encoding result of the second target number; and send a plurality of third intermediate values and a plurality of fourth intermediate values to the summation subunit; and
the summation subunit is configured to compute the difference between the first target number and the second target number based on the plurality of third intermediate values and the plurality of fourth intermediate values.

9. The adder according to claim 8, wherein the second compute subunit comprises a second voltage regulation subunit and a fifth voltage regulation subunit, and the second voltage regulation subunit is connected to the fifth voltage regulation subunit;
the fifth voltage regulation subunit is configured to: determine an output voltage value of the fifth voltage regulation subunit based on any first positive factor in the first differential pair set, a first negative factor corresponding to the first positive factor, a value corresponding to the first positive factor in the redundant encoding result of the second target number, and a voltage value at which the fifth voltage regulation subunit is connected; and send the output voltage value of the fifth voltage regulation subunit to the second voltage regulation subunit; and
the second voltage regulation subunit is configured to determine the plurality of third intermediate values based on the output voltage value of the fifth voltage regulation subunit.

10. The adder according to claim 9, wherein the second compute subunit further comprises a first voltage regulation subunit and a sixth voltage regulation subunit, and the sixth voltage regulation subunit is connected to the first voltage regulation subunit;
the sixth voltage regulation subunit is configured to: determine an output voltage value of the sixth voltage regulation subunit based on any first positive factor in the first differential pair set, a first negative factor corresponding to the first positive factor, a value corresponding to the first positive factor in the redundant encoding result of the second target number, and a voltage value at which the sixth voltage regulation subunit is connected; and send the output voltage value of the sixth voltage regulation subunit to the first voltage regulation subunit; and
the first voltage regulation subunit is configured to determine the plurality of fourth intermediate values based on the output voltage value of the sixth voltage regulation subunit.

11. An adder, comprising a redundant encoding unit, a decoder unit, and a compute unit, wherein the redundant encoding unit is connected to each of the decoder unit and the compute unit, and the decoder unit is further connected to the compute unit;
the redundant encoding unit is configured to: perform redundant encoding on each of a first target number and a second target number that are input into the adder; and when both the first target number and the second target number are signed numbers, send both a redundant encoding result of the first target number and a redundant encoding result of the second target number to the decoder unit;
the decoder unit is configured to: decode the redundant encoding result of the first target number to obtain the first differential pair set; decode the redundant encoding result of the second target number to obtain a second differential pair set; and send the first differential pair set and the second differential pair set to the compute unit; and
the compute unit is configured to: compute and output, based on the first differential pair set and the second differential pair set, a sum of the first target number and the second target number, or a difference between the first target number and the second target number.

12. The adder according to claim 11, wherein the compute unit comprises a first compute subunit, a second compute subunit, and a summation subunit, and when both the first target number and the second target number are signed numbers,
the first compute subunit is configured to: determine a fifth intermediate value and a sixth intermediate value based on any first positive factor in the first differential pair set, a first negative factor corresponding to the first positive factor, and a second positive factor corresponding to the first positive factor in the second differential pair set; and send a plurality of fifth intermediate values and a plurality of sixth intermediate values to the second compute subunit;
the second compute subunit is configured to: determine a seventh intermediate value and an eighth intermediate value based on any second negative factor in the second differential pair set, a fifth intermediate value corresponding to the second negative factor, and a sixth intermediate value corresponding to the second negative factor; and send a plurality of seventh intermediate values and a plurality of eighth intermediate values to the summation subunit; and
the summation subunit is configured to compute the sum of the first target number and the second target number based on the plurality of seventh intermediate values and the plurality of eighth intermediate values.

13. A chip, comprising the adder according to any one of claims 1 to 10, or the adder according to either of claims 11 and 12.

14. An electronic device, comprising a circuit board and the chip according to claim 13, wherein the chip is disposed on the circuit board.
